# EUROPÄISCHE PATENTSCHRIFT

(11) **EP 2 474 453 B1**
(45) Veröffentlichungstag und Bekanntmachung des Hinweises auf die Patenterteilung: **08.01.2014**
(21) Anmeldenummer: 11188470.6
(22) Anmeldetag: 09.11.2011
(51) Int. Cl.: B60R 21/38

(54) **Fronthaubenscharnier**
Bonnet hinge
Charnière de capot frontal

(43) Veröffentlichungstag der Anmeldung: 11.07.2012
(73) Patentinhaber: Metalsa Automotive GmbH, 51702 Bergneustadt (DE)
(72) Erfinder: Löwen, Jakob, 51647 Gummersbach (DE); Olfert, Johann, 51702 Bergneustadt (DE)
(74) Vertreter: Kalkoff & Partner

(56) Entgegenhaltungen:
- WO-A1-2004/108486
- DE-A1-102004 062 105
- DE-A1-102005 049 641
- DE-A1-102006 010 801
- DE-A1-102009 040 407
- DE-U1- 20 313 924

## Beschreibung

Die Erfindung betrifft ein Fronthaubenscharnier zur gelenkigen Anordnung einer Fronthaube an einem Fahrzeug, mit
- einem mit einem Karosseriebauteil verbindbaren Scharnierunterteil,
- einem mit der Fronthaube verbindbaren Scharnieroberteil mit
   - einem gelenkig mit dem Scharnierunterteil verbundenen Klappenteil und
   - einem an der Fronthaube anordbaren, gelenkig mit dem Klappenteil verbundenen und gegenüber diesem zwischen einer Normallage und einer Crashlage verstellbaren Oberteil,
- einer Arretierungsvorrichtung zur lösbaren Festlegung des Oberteils an dem Klappenteil in der Normallage und
- einer Trennvorrichtung zur Auflösung der durch die Arretierungsvorrichtung erzeugten Festlegung des Oberteils an dem Klappenteil in der Normallage.

Fronthaubenscharniere der eingangs genannten Art sind bereits in vielfältigen Ausgestaltungen aus dem Stand der Technik bekannt. Sie dienen zur schwenkbaren Aufnahme der Fronthaube, bspw. einer Motorhaube eines Kraftfahrzeuges und können zwischen einer Schließposition, in der die Haube, in der Regel gesichert durch ein Haubenschloss, einen Motorraum überdeckt und einer Öffnungsposition, welche den Zugang zu einem unter der Fronthaube angeordneten Motorraum ermöglicht, verstellt werden.

Zur Verringerung der Schwere von Personenschäden bei Unfällen, bei denen die Personen mit der Fronthaube eines Kraftfahrzeugs in Kontakt kommen, werden zunehmend höhere Anforderungen an die Fahrzeughersteller gestellt, um den Fußgängerschutz zu erhöhen. Wesentlich ist dabei, dass gewährleistet werden muss, dass vorgeschriebene HIC-Werte (Kopfaufprall auf der Fronthaube) erreicht werden. Zur Erreichung der vorgeschriebenen HIC-Werte werden bspw. für den Fall, dass zwischen der Fronthaubenunterseite und den darunter angeordneten Fahrzeugskomponenten, bspw. dem Motorblock, nicht genügend Raum zur Energieabsorbierung bei einem Aufprall durch Deformation der Fronthaube zur Verfügung steht, vermehrt aktive Systeme eingesetzt, bei dem sich die Fronthaube im Falle eines Unfalls aufstellt, um unterhalb der Fronthaube einen geeignet großen Verformungsraum zu schaffen.

Bekannte Systeme, die eine Aufstellung einer Fronthaube bewirken, weisen in der Regel einen sehr komplexen Aufbau auf, wobei insbesondere Mehrgelenkscharniere zum Einsatz kommen, welche eine Translations- und eine Schwenkbewegung der Fronthaube beim Übergang zwischen der Schließposition und der Öffnungsposition kombinieren. Damit auch derartige Fronthaubenscharniere im Ernstfall einen ergänzenden Verformungsraum bereitstellen, weisen diese äußerst komplexe Ausgestaltungen auf, die einen großen Bauraum zur Folge haben. Darüber hinaus können derartige Fronthaubenscharnier eine zumindest geringe Instabilität aufweisen, welche zu einer zu großen Bewegungsfreiheit der Fronthaube, insbesondere in Y-Richtung, d. h. quer zum Fahrzeug zur Folge hat, was wiederum zu einem Flattern bzw. Schwimmen der Fronthaube führen kann.

Aus der WO 2004/108486 A1 ist ein Fronthaubenscharnier zur gelenkigen Anordnung einer Fronthaube an einem Fahrzeug bekannt.

Der Erfindung liegt die Aufgabe zugrunde, ein Fronthaubenscharnier der eingangs genannten Art bereitzustellen, das sich besonders kostengünstig herstellen lässt, eine hohe Funktionssicherheit aufweist sowie im Normalbetrieb eine hohe Stabilität besitzt.

Die Erfindung löst die Aufgabe durch ein Fronthaubenscharnier mit den Merkmalen des Anspruchs 1. Vorteilhafte Weiterbildungen der Erfindung sind in den abhängigen Ansprüche angegeben.

Wesentlich für das erfindungsgemäße Fronthaubenscharnier ist, dass das gelenkig mit dem Scharnierunterteil verbundene Scharnieroberteil ein an der Fronthaube anordbares Oberteil und ein gelenkig mit dem Scharnierunterteil verbundenes Klappenteil aufweist, wobei das Klappenteil und das Oberteil in ihrer im Normalbetrieb bestehenden Normallage relativ zueinander über eine Arretierungsvorrichtung lösbar festgelegt sind. Die lösbare Arretierung gewährleistet, dass im Normalbetrieb eine störungsfreie Bedienung der Fronthaube möglich ist und dass gegenüber herkömmlichen Fronthaubenscharnieren keine Beeinträchtigung besteht. Die Arretierungsvorrichtung gewährleistet zuverlässig, dass das Oberteil und das Klappenteil relativ zueinander bei allen im regulären Betrieb auftretenden Kräften festgelegt sind.

Zur Verstellung des Oberteils relativ gegenüber dem Klappenteil ist es zunächst erforderlich, die durch die Arretierungsvorrichtung bewirkte Festlegung aufzulösen, wobei hierzu erfindungsgemäß eine Trennvorrichtung verwendet wird. Eine Aktivierung der Trennvorrichtung, hervorgerufen durch eine geeignete Sensorik zur Erkennung eines Personenunfalls führt zu einer Auflösung der Festlegung des Oberteils an dem Klappenteil, so dass das Oberteil aus der Normallage in Richtung auf eine Crashlage verstellt werden kann, in der eine Fronthaube gegenüber der Normallage eine angehobene Position aufweist.

Kennzeichnend für das erfindungsgemäße Fronthaubenscharnier ist dabei, dass die Arretierungsvorrichtung ein in der Normallage zwischen einer Verriegelungsstellung und einer Entriegelungsstellung verstellbares Sperrelement aufweist, das derart ausgebildet ist, dass eine Kraftbeaufschlagung des in der Normallage angeordneten Oberteils mit einer in Richtung auf die Crashlage des Oberteils gerichteten Entriegelungskraft eine Verstellung des Sperrelements aus der Verriegelungsstellung in die Entriegelungsstellung bewirkt. Erfindungsgemäß ist somit vorgesehen, dass das Oberteil, um dessen Verlagerung in die Crashlage zu ermöglichen, gegenüber dem Klappenteil mit einer Entriegelungskraft beaufschlagt wird, welche in Bewegungsrichtung des Oberteils aus der Normallage in die Crashlage gerichtet ist. Die Entriegelungskraft ist dabei derart bemessen, dass das das Oberteil in der Normallage an dem Klappenteil festlegende Sperrelement der Arretierungsvorrichtung aus der Verriegelungsstellung in die Entriegelungsstellung bewegt wird, so dass dann eine Verstellung bis in die Crashlage erfolgen kann, in der ein mit dem Oberteil verbundene Fronthaube gegenüber der Normallage aufgestellt ist.

Die Ausgestaltung der Arretierungsvorrichtung mit einem erfindungsgemäßen Sperrelement ermöglicht es, auf eine direkt auf die Arretierungsvorrichtung wirkende Betätigungseinheit zu verzichten. Die Arretierungsvorrichtung sichert in zuverlässiger Weise die Position des Oberteils am Klappenteil in der Normallage. Zur Verlagerung des Oberteils ist es nicht erforderlich, die Arretierungsvorrichtung zu betätigen, sondern muss hierfür vielmehr nur das Oberteil mit der in Richtung auf die Crashlage gerichteten Entriegelungskraft beaufschlagt werden, wodurch eine Verstellung des Sperrelements bewirkt wird. Das erfindungsgemäße Fronthaubenscharnier lässt sich somit besonders einfach und kostengünstig herstellen.

Die Ausgestaltung des Sperrelements der Arretierungsvorrichtung derart, dass dieses eine zuverlässige Festlegung des Oberteils am Klappenteil in Normallage einerseits und eine Freigabe im Falle einer Kraftbeaufschlagung des Oberteils mit einer Entriegelungskraft in Richtung auf die Crashlage andererseits gewährleistet, ist grundsätzlich frei wählbar. Nach einer besonders vorteilhaften Ausgestaltung der Erfindung ist jedoch vorgesehen, dass das Sperrelement in Richtung auf die Verriegelungsstellung vorgespannt ist. Über die Vorspannung lässt sich in besonders einfacher sowie zugleich zuverlässiger Weise eine Festlegung der zur Verlagerung des Sperrelements aus der Verriegelungsstellung in die Entriegelungsstellung notwendigen Entriegelungskraft bestimmen. Gleichzeitig gewährleistet die Vorspannung eine sichere Positionierung des Sperrelements in der Verriegelungsstellung, wodurch die Zuverlässigkeit des Fronthaubenscharniers insbesondere im Normalbetrieb in ergänzender Weise gesteigert wird. Zur Verlagerung des Sperrelements in die Entriegelungsstellung ist dieses nur entgegen der bestehenden Vorspannung zu bewegen, welche besonders vorteilhafterweise auch dazu genutzt werden kann, um die Position des Oberteils in der Crashlage zu sichern. Darüber hinaus bietet die Vorspannung die Möglichkeit einer einfachen Reversierung des Oberteils gegenüber dem Klappenteil. Hierzu ist es lediglich erforderlich, das Oberteil durch die Fronthaube herunterzudrücken, bis das Sperrelement in der Normallage durch die Vorspannung das Oberteil erneut am Klappenteil festlegt.

Die Ausgestaltung der Vorspannung ist grundsätzlich beliebig realisierbar. Besonders vorteilhafterweise ist jedoch nach einer Weiterbildung der Erfindung vorgesehen, dass die Vorspannung einstellbar ist. Die Einstellbarkeit ermöglicht es, eine Justierung der das Sperrelement in Richtung auf die Verriegelungsstellung vorspannenden Kraft vorzunehmen, so dass auch im Betrieb des Fronthaubenscharniers im eingebauten Zustand Anpassungen in besonders einfacher Weise, bspw. zur Kompensation von Materialermüdungen, vorgenommen werden können. Somit lässt sich die Arretierungsvorrichtung in besonders einfacher Weise an die zur Verlagerung des Sperrelements in die Entriegelungsstellung verfügbare Entriegelungskraft anpassen.

Die Ausgestaltung des Sperrelements derart, dass es in der Verriegelungsstellung das Oberteil an dem Klappenteil festlegt, ist grundsätzlich frei wählbar. Nach einer besonders vorteilhaften Ausgestaltung der Erfindung ist jedoch vorgesehen, dass das Sperrelement ein Rastelement aufweist, das in der Verriegelungsstellung in einer Rastmarke an dem Oberteil und/oder dem Klappenteil eingreift. Gemäß dieser Ausgestaltung der Erfindung wird über das Sperrelement, nämlich das in eine Rastmarke eingreifende Rastelement eine formschlüssige Verbindung zwischen dem Oberteil und dem Klappenteil hergestellt, welche eine besonders zuverlässige Lagesicherung des Oberteils am Klappenteil in der Normallage gewährleistet. Relativbewegungen des Oberteils gegenüber dem Klappenteil im Normalbetrieb können durch diese Ausgestaltung der Erfindung besonders zuverlässig vermieden werden.

Im Falle der vorteilhaften Verwendung eines Sperrelements mit einem Rastelement das in eine Rastmarke eingreift, sind das Rastelement und die Rastmarke zur Gewährleistung der Funktion des erfindungsgemäßen Fronthaubenscharniers derart ausgestaltet, dass bei einer Kraftbeaufschlagung des Oberteils mit der Entriegelungskraft die Rastmarke mit dem Rastelement außer Eingriff gelangt, so dass dann eine Verstellung des Oberteils gegenüber dem Klappenteil möglich ist. Die grundsätzliche Ausgestaltung von Rastmarke und Rastelement zur Gewährleistung dieser Funktion ist dabei grundsätzlich frei wählbar.

Nach einer besonders vorteilhaften Ausgestaltung der Erfindung ist jedoch vorgesehen, dass das Rastelement und/oder die Rastmarke eine schräg und/oder bogenförmig verlaufende Rastfläche aufweist. Gemäß dieser Ausgestaltung der Erfindung ist vorgesehen, dass, insbesondere in Bewegungsrichtung des Oberteils in Richtung auf die Crashlage und/oder Bewegungsrichtung des Oberteils in Richtung auf die Normallage, das Rastelement und/oder die Rastmarke gegenüber der Bewegungsrichtung schräg bzw. bogenförmig verlaufende Flanken aufweist. Durch diese Ausgestaltung wird in besonders zuverlässiger Weise gewährleistet, dass bei einer Kraftbeaufschlagung des Oberteils mit der Entriegelungskraft das Rastelement mit der Rastmarke außer Eingriff gelangt, nachdem bei schräg- und/oder bogenförmig verlaufenden Flanken diese bei einer entsprechenden Kraftbeaufschlagung aneinander ansteigen, bis das Rastelement aus der Rastmarke herausgelangt.

Die Anordnung des Sperrelements der Arretierungsvorrichtung an dem Oberteil und dem Klappenteil ist grundsätzlich frei wählbar. Ebenso ist im Falle der Verwendung von Rastmarken und Rastelementen deren Anordnung an dem Sperrelement sowie dem Oberteil oder Klappenteil grundsätzlich frei wählbar. Nach einer besonders vorteilhaften Ausgestaltung der Erfindung ist jedoch vorgesehen, dass das Sperrelement an einem sich durch eine Kulissenführung des Oberteils erstreckenden und an dem Klappenteil festgelegten Führungsbolzen axial zwischen der Verriegelungsstellung und der Entriegelungsstellung verschiebbar angeordnet ist, wobei das Rastelement an dem Sperrelement der Verriegelungsstellung in eine Rastmarke an dem Oberteil eingreift. Gemäß dieser Ausgestaltung der Erfindung ist das Sperrelement an einem ortsfest an dem Klappenteil angeordneten Führungsbolzen axial verschiebbar gelagert. In der Normallage sichert das Sperrelement die Position des Oberteils gegenüber dem Klappenteil über ein Rastelement, welches in eine Rastmarke an dem Oberteil eingreift. Das Oberteil und das Klappenteil sind somit über das Rastelement des Sperrelements formschlüssig aneinander festgelegt. Zur Verstellung des Oberteils aus der Normallage in die Crashlage ist es erforderlich, das Sperrelement axial entlang des Führungsbolzens in eine von dem Oberteil weggerichtete Richtung zu bewegen, wodurch dann das Rastelement und die Rastmarke außer Eingriff gelangen. Eine entsprechende Bewegung wird dabei durch die Trennvorrichtung hervorgerufen, welche das Oberteil in Richtung der durch die Kulissenführung vorgegebenen Richtung mit der Entriegelungskraft belastet. Die Kulissenführung, die bspw. durch ein entsprechendes Langloch gebildet sein kann, bestimmt dabei die Normallage sowie über ihre Länge die Crashlage des Oberteils.

Die verschiebbare Ausgestaltung des Sperrelements gegenüber den Führungsbolzen kann dabei grundsätzlich beliebig ausgebildet sein. Nach einer besonders vorteilhaften Ausgestaltung der Erfindung ist jedoch vorgesehen, dass das Sperrelement koaxial zum Führungsbolzen und verdrehsicher gegenüber diesem angeordnet ist und vorzugsweise zwei diametral angeordnete Rastelemente aufweist. Diese Ausgestaltung der Erfindung gewährleistet eine besonders zuverlässige Funktion der Arretierungsvorrichtung und sichert das Oberteil in besonders zuverlässiger Weise in der Normallage an dem Klappenteil. Gleichzeitig wird zudem zuverlässig gewährleistet, dass im Falle einer Kraftbeaufschlagung des Oberteils mit der Entriegelungskraft das Sperrelement in die Entriegelungsstellung verstellt wird.

Die Ausgestaltung der gemäß einer vorteilhaften Weiterbildung der Erfindung vorgesehenen Vorspannung des Sperrelements in Richtung auf die Entriegelungsstellung ist im Falle der vorteilhafterweise vorgesehenen Verwendung eines Führungsbolzens grundsätzlich frei wählbar. Nach einer besonders vorteilhaften Weiterbildung der Erfindung ist jedoch vorgesehen, dass das Sperrelement durch eine koaxial zum Führungsbolzen angeordnete Schraubendruckfeder in Richtung auf die Verriegelungsstellung vorgespannt ist. Durch diese Ausgestaltung der Erfindung lässt sich eine besonders zuverlässige Lagesicherung des Sperrelements in der Verriegelungsstellung gewährleisten. Gleichzeitig wird zudem die für die Verlagerung des Sperrelements erforderliche Entriegelungskraft zuverlässig festgelegt.

Die Kraftübertragung der Schraubendruckfeder auf das Sperrelement kann dabei mittelbar oder unmittelbar erfolgen. Nach einer besonders vorteilhaften Ausgestaltung der Erfindung ist jedoch vorgesehen, dass die Schraubendruckfeder einenends an dem Sperrelement und anderenends an einer auf den Führungsbolzen aufschraubbaren Mutter anliegt. Gemäß dieser Ausgestaltung der Erfindung lässt sich die durch die Schraubendruckfeder auf das Sperrelement wirkende Federkraft in besonders einfacher sowie zuverlässiger Weise einstellen. Gleichzeitig erlaubt diese Ausgestaltung der Erfindung einen besonders kompakten Aufbau, so dass das Fronthaubenscharnier einen besonders geringen Bauraum beansprucht.

Die Ausgestaltung der Trennvorrichtung ist grundsätzlich frei wählbar. Nach einer besonders vorteilhaften Ausgestaltung ist jedoch vorgesehen, dass diese bei ihrer Aktivierung unmittelbar an dem Oberteil angreift und dieses mit der in Richtung auf die Crashlage gerichteten Entriegelungskraft beaufschlagt. Die Aktivierung der Trennvorrichtung bewirkt dabei eine zumindest partielle Verlagerung des Oberteils gegenüber dem Klappenteil, bis das Sperrelement in der Entriegelungsstellung angeordnet ist, in der im Falle der Verwendung von einem Rastelement und einer Rastmarke diese vollständig außer Eingriff gelangt sind. Eine Weiterverlagerung des Oberteils bis in die Crashlage kann dabei grundsätzlich in beliebiger Weise erfolgen. So kann bspw. vorgesehen sein, dass das Oberteil in Richtung auf die Crashlage vorgespannt ist und nach einer Verlagerung des Sperrelements in die Entriegelungsstellung die Vorspannung die Verstellung des Oberteils bis in die Crashlage bewirkt.

Nach einer besonders vorteilhaften Ausgestaltung der Erfindung ist jedoch vorgesehen, dass die Trennvorrichtung derart ausgebildet ist, dass deren Aktivierung eine vollständige Verstellung des Oberteils in die Crashlage bewirkt. Auf zusätzliche Verstelleinrichtungen zur Verlagerung des Oberteils aus der Normallage in die Crashlage kann somit besonders zuverlässig verzichtet werden.

Die Ausgestaltung der Trennvorrichtung derart, dass diese im Falle der Aktivierung das Oberteil mit einer in Richtung auf die Crashlage gerichteten Entriegelungskraft beaufschlagt ist grundsätzlich frei wählbar. Nach einer besonders vorteilhaften Ausgestaltung der Erfindung ist jedoch vorgesehen, dass diese einen pyrotechnischen Aktuator aufweist, der derart ausgebildet ist, dass bei dessen Aktivierung ein Antriebselement des Aktuators das Oberteil mit der Entriegelungskraft beaufschlagt und in Richtung auf die Crashlage verstellt. Die Verwendung eines pyrotechnischen Aktuators zeichnet sich durch die hohe Funktionssicherheit sowie gleichzeitig den geringen Bauraum aus, so dass das Fronthaubenscharnier in ergänzender Weise bauraumsparend ausgebildet sein kann.

Besonders vorteilhafterweise kann der Aktuator auch derart ausgebildet sein, dass das Antriebselement nach der Aktivierung eine vollständige Verstellung des Oberteils in die Crashlage bewirkt, wodurch die Funktionssicherheit des Fronthaubenscharniers in ergänzender Weise gesteigert werden kann.

Ausführungsbeispiele der Erfindung werden nachstehend mit Bezug auf die Zeichnungen näher erläutert. In den Zeichnungen zeigen:
- Fig. 1: eine perspektivische Ansicht einer ersten Ausführungsform eines Fronthaubenscharniers in einer Normallage des Scharnieroberteils;
- Fig. 2: eine vergrößerte Darstellung einer Arretierungsvorrichtung des Fronthaubenscharniers von Fig. 1 in einer perspektivischen Darstellung;
- Fig. 3: eine Schnittansicht einer weiteren Ausführungsform einer Arretierungsvorrichtung;
- Fig. 4: eine perspektivische Darstellung einer zweiten Ausführungsform eines Fronthaubenscharniers und
- Fig. 5: eine vergrößerte perspektivische Darstellung der Arretierungsvorrichtung des Fronthaubenscharniers von Fig. 4.

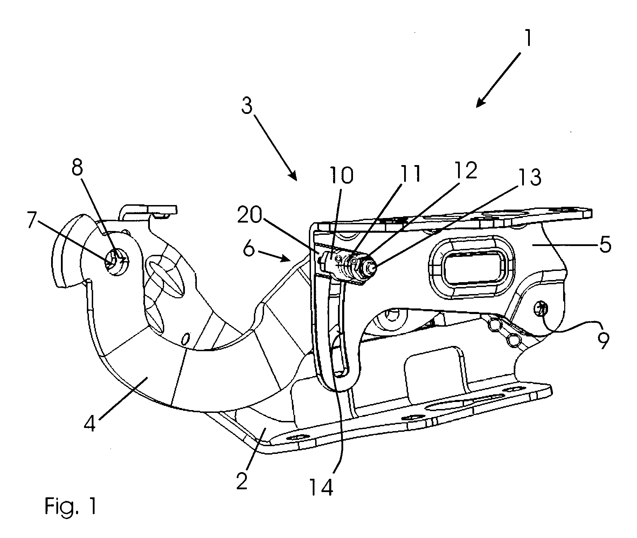

In Fig. 1 ist eine erste Ausführungsform eines Fronthaubenscharniers 1 in einer perspektivischen Darstellung abgebildet. Das Fronthaubenscharnier 1 weist ein an einer hier nicht dargestellten Karosserie anordbares Scharnierunterteil 2 auf. Dieses ist über einen hier nicht dargestellten, sich durch Lagerbolzenaufnahmen 7, 8 am Scharnierunterteil 2 und am Klappenteil 4 erstreckenden Lagerbolzen gelenkig mit einem Klappenteil 4 eines Scharnieroberteils 3 verbunden. Das Scharnieroberteil 3 weist neben dem Klappenteil 4 ein gelenkig mit dem Klappenteil 4 verbundenes Oberteil 5 auf, wobei das Oberteil 5 zur gelenkigen Verbindung mit dem Klappenteil 4 eine Lagerbolzenaufnahme 9 aufweist.

Zur Anordnung einer hier nicht dargestellten Fronthaube an dem Fronthaubenscharnier 1 dient das Oberteil 5, welches mit einer entsprechenden Anlagefläche versehen ist. Im Normalbetrieb des Fronthaubenscharniers 1 erfolgt eine Öffnung der Fronthaube durch Verschwenkung des Scharnieroberteils 3, nämlich dem Klappenteil 4 und dem gegenüber dem Klappenteil 4 festgelegten Oberteil 5 gegenüber dem Scharnierunterteil 2.

Das Oberteil 5 ist dabei über eine Arretierungsvorrichtung 6 lösbar an dem Klappenteil 4 festgelegt. Die Arretierungsvorrichtung 6 weist hierzu einen Führungsbolzen 13 auf, welcher sich durch eine Kulisse 14 an dem Oberteil 5 erstreckt und an dem Klappenteil 4 festgelegt ist. Koaxial zum Führungsbolzen 13 ist ein Sperrelement 10 angeordnet, welches durch eine ebenfalls koaxial zu dem Führungsbolzen 13 angeordnete Schraubendruckfeder 11 an die dem Sperrelement 10 zugewandte Seite des Oberteils 5 gedrückt wird, wobei in der in Fig. 1 dargestellten Normallage das Sperrelement 10 an einem Sperrelementesitz 20 des Oberteils 5 anliegt. Zur Vorspannung des Sperrelements 10 in Richtung auf das Oberteil 5 dient die Schraubendruckfeder 11, welche einenends an dem Sperrelement 10 und anderenends an einer auf den Führungsbolzen 13 aufschraubbaren Mutter 12 anliegt, mittels derer sich die Federkraft einstellen lässt.

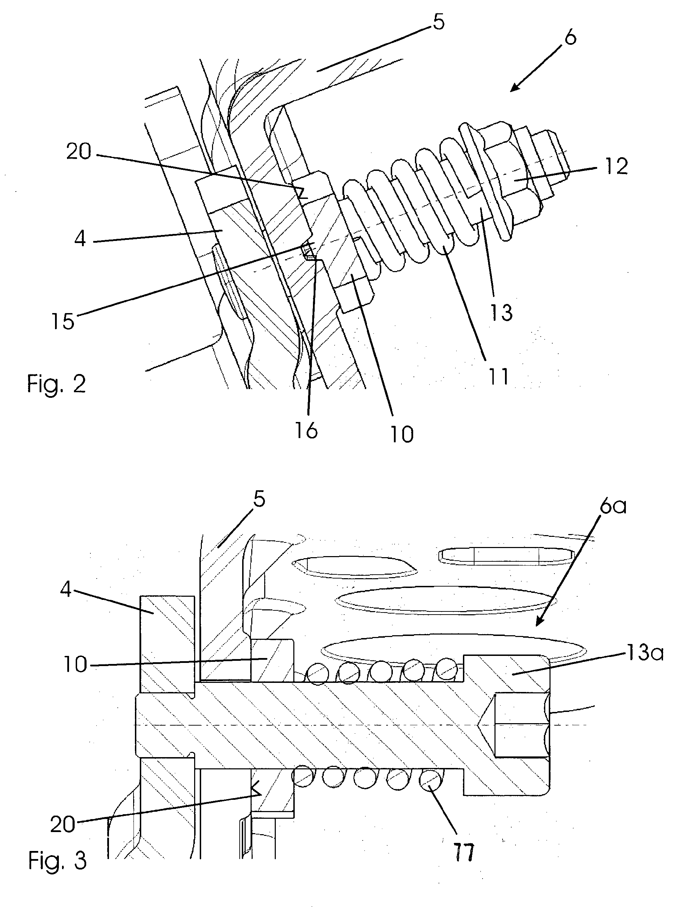

In der in Fig. 1 dargestellten Normallage sind von dem Sperrelement 10 in Richtung auf den Sperrelementesitz 20 vorstehende Rastelemente 15 in entsprechenden Rastmarken 16 an dem Sperrelementsitz 20 angeordnet. Die in den Rastmarken 16 angeordneten Rastelemente 15 sichern somit die Position des Oberteils 5 an dem Klappenteil 4 in der Normallage formschlüssig (vgl. Fig. 2).

Die Rastelemente 15, welche diametral an dem Sperrelement 10 angeordnet sind, weisen in der durch die Kulisse 14 bestimmten Verstellrichtung des Oberteils 5 aus der in Fig. 1 dargestellten Normallage in eine hier nicht dargestellte Crashlage, welche durch die Länge der Kulisse 14 bestimmt ist, abgeschrägte Seitenflächen auf. Eine Beaufschlagung des Oberteils 5 mit einer Entriegelungskraft in Richtung auf die durch die Kulisse 14 bestimmten Crashlage, bewirkt aufgrund der sich durch die Schrägflächen ergebenen, in Richtung des Führungsbolzens 13 auf das Sperrelement 10 wirkenden Kraftkomponente eine Verstellung des Sperrelements 10 entlang des Führungsbolzens 13 aus der dargestellten Verriegelungsstellung in eine nicht dargestellte Entriegelungsstellung, in der die Rastelemente 15 mit den Rastmarken 16 außer Eingriff gelangen, so dass das Oberteil 5 dann in die Crashlage verstellt werden kann.

Eine alternative Ausgestaltung der Arretierungsvorrichtung 6 des Fronthaubenscharniers von Fig. 1 ist in Fig. 3 dargestellt. Die dort dargestellte Arretierungsvorrichtung 6a weist im Gegensatz zu dem in Fig. 1 und 2 dargestellten, mit dem Klappenteil 4 vernieteten Führungsbolzen 13 eine sich durch die Führungskulisse 14 erstreckende, in das Klappenteil 4 bis zur Schulter eingeschraubte Schraube 13a auf, wobei sich eine koaxial zur Schraube 13a angeordnete Schraubendruckfeder 11 einerseits am Schraubenkopf und andererseits am Sperrelement 10 abstützt.

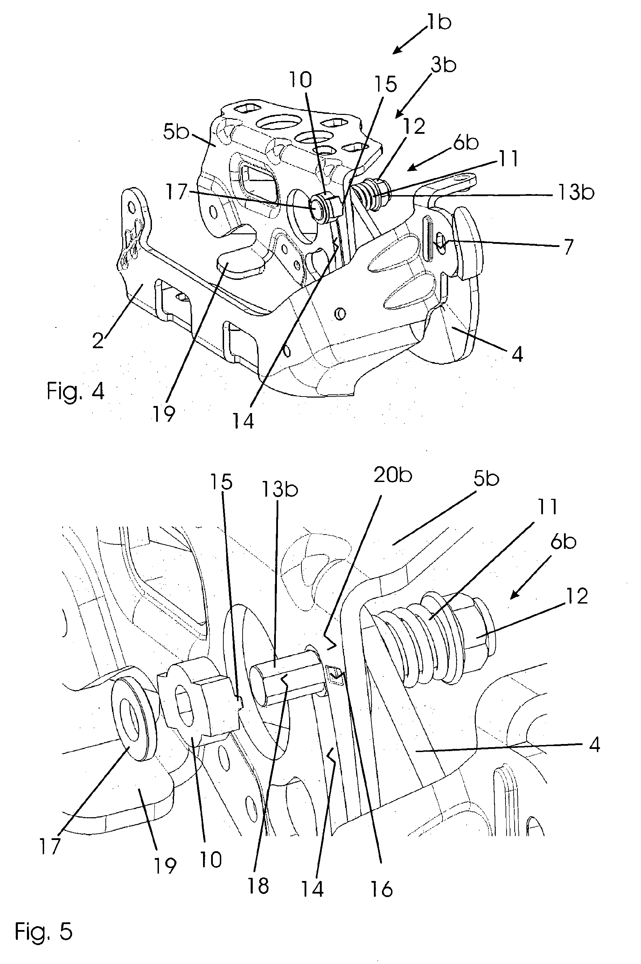

Das in den Figuren 4 und 5 dargestellten Ausführungsbeispiel eines Fronthaubenscharniers 1b unterscheidet sich von dem in Fig. 1 dargestellten Fronthaubenscharnier 1 dadurch, dass das Sperrelement 10 nicht an der der Schraubendruckfeder 11 zugewandten Seite an dem Oberteil 5 anliegt, sondern auf der der Druckfeder 11 gegenüberliegenden Seite einerseits an einem Sperrelementesitz 20b und andererseits an einer mit dem Führungsbolzen 13 vernieteten Scheibe 17 anliegt. Insofern wird das Sperrelement 10 im Gegensatz zu dem in Fig. 1 dargestellten Ausführungsbeispiel nicht unmittelbar durch die Schraubendruckfeder 11 auf den des Sperrelementesitz 20b gedrückt, sondern vielmehr auf diesen gezogen. Zur verdrehsicheren Anordnung des Sperrelementes 10 an dem Führungsbolzen 13b weist das Sperrelement 10 innerhalb einer Durchgangsbohrung angeordnete Vorsprünge auf, welche mit korrespondierenden Nuten 18 an dem Führungsbolzen 13b zusammen wirken.

Eine Übertragung einer Entriegelungskraft auf das Oberteil 5 erfolgt durch eine nicht dargestellte Trennvorrichtung mit einem hier nicht dargestellten pyrotechnischen Aktuator. Dieser weist einen bei Aktivierung des Aktuators angetriebenen Kolben auf, welcher an einen Anschlag 9 des Fronthaubenscharniers 1, 1b angreift und dabei die Entriegelungskraft auf das Oberteil 5 überträgt, die ausreichend ist, um das Sperrelement 10 aufgrund der entstehenden, in Führungsbolzenrichtung auf das Sperrelement 10 wirkenden Kraft von dem Sperrelementesitz 20 abzuheben, bis die Rastelemente 15 mit den Rastmarken 16 außer Eingriff gelangen.

## Patentansprüche

1. Fronthaubenscharnier (1, 1b) zur gelenkigen Anordnung einer Fronthaube an einem Fahrzeug, mit
- einem mit einem Karosseriebauteil verbindbaren Scharnierunterteil (2);
- einem mit der Fronthaube verbindbaren Scharnieroberteil (3) mit
- einem gelenkig mit dem Scharnierunterteil (2) verbundenen Klappenteil (4) und
- einem an der Fronthaube anordbaren, gelenkig mit dem Klappenteil (4) verbundenen und gegenüber diesem zwischen einer Normallage und einer Crashlage verstellbaren Oberteil (5),
- einer Arretierungsvorrichtung (6, 6a, 6b) zur lösbaren Festlegung des Oberteils (5) an dem Klappenteil (4) in der Normallage und
- einer Trennvorrichtung zur Auflösung der durch die Arretierungsvorrichtung (6, 6a, 6b) erzeugten, das Oberteil (5) in der Normallage an dem Klappenteil (4) festgelegten Verbindung,
**dadurch gekennzeichnet, dass**
die Arretierungsvorrichtung (6, 6a, 6b) ein in der Normallage zwischen einer Verriegelungsstellung und einer Entriegelungsstellung verstellbares Sperrelement (10) aufweist, das derart ausgebildet ist, dass eine Kraftbeaufschlagung des in der Normallage angeordneten Oberteils (5) mit einer in Richtung auf die Crashlage des Oberteils (5) gerichteten Entriegelungskraft eine Verstellung des Sperrelements (10) aus der Verriegelungsstellung in die Entriegelungsstellung bewirkt.

2. Fronthaubenscharnier nach Anspruch 1, **dadurch gekennzeichnet, dass** das Sperrelement (10) in Richtung auf die Verriegelungsstellung vorgespannt ist.

3. Fronthaubenscharnier nach Anspruch 1 oder 2, **dadurch gekennzeichnet, dass** die Vorspannung einstellbar ist.

4. Fronthaubenscharnier nach einem der vorhergehenden Ansprüche, **dadurch gekennzeichnet, dass** das Sperrelement (10) ein Rastelement (15) aufweist, das in der Verriegelungsstellung in eine Rastmarke (16) an dem Oberteil (5) und/oder dem Klappenteil (4) eingreift.

5. Fronthaubenscharnier nach einem der vorhergehenden Ansprüche, **dadurch gekennzeichnet, dass** das Rastelement (15) und/oder die Rastmarke (16) eine schräg und/oder bogenförmig verlaufende Rastfläche aufweist.

6. Fronthaubenscharnier nach einem der vorhergehenden Ansprüche, **dadurch gekennzeichnet, dass** das Sperrelement (10) an einem sich durch eine Kulissenführung (14) des Oberteils (5) erstreckenden und an dem Klappenteil (4) festgelegten Führungsbolzen (13, 13a, 13b) axial zwischen der Verriegelungsstellung und der Entriegelungsstellung verschiebbar angeordnet ist, wobei das Rastelement (15) an dem Sperrelement (10) in der Verriegelungsstellung in eine Rastmarke (16) an dem Oberteil (5) eingreift.

7. Fronthaubenscharnier nach einem der vorhergehenden Ansprüche, **dadurch gekennzeichnet, dass** das Sperrelement (10) koaxial zum Führungsbolzen (13, 13a, 13b) und verdrehsicher gegenüber diesem angeordnet ist und vorzugsweise mindestens zwei diametral angeordnete Rastelemente (15) aufweist.

8. Fronthaubenscharnier nach einem der vorhergehenden Ansprüche, **dadurch gekennzeichnet, dass** das Sperrelement (10) durch eine koaxial zum Führungsbolzen (13, 13a, 13b) angeordnete Schraubendruckfeder (11) in Richtung auf die Verriegelungsstellung vorgespannt ist.

9. Fronthaubenscharnier nach einem der vorhergehenden Ansprüche, **dadurch gekennzeichnet, dass** die Schraubendruckfeder (11) einenends an dem Sperrelement (10) und anderenends an einer auf den Führungsbolzen aufschraubbaren Mutter (12) anliegt.

10. Fronthaubenscharnier nach einem der vorhergehenden Ansprüche, **dadurch gekennzeichnet, dass** eine Aktivierung der Trennvorrichtung eine Kraftbeaufschlagung des Oberteils (5) mit einer in Richtung auf die Crashlagegerichteten Entriegelungskraft bewirkt.

11. Fronthaubenscharnier nach einem der vorhergehenden Ansprüche, **dadurch gekennzeichnet, dass** die Trennvorrichtung einen pyrotechnischen Aktuator aufweist, der derart ausgebildet ist, dass bei dessen Aktivierung ein Antriebselement des Aktuators das Oberteil (5) mit der Entriegelungskraft beaufschlagt und in Richtung auf die Crashlage verstellt.

12. Fronthaubenscharnier nach einem der vorhergehenden Ansprüche, **dadurch gekennzeichnet, dass** der Aktuator derart ausgebildet ist, dass das Antriebselement nach der Aktivierung eine vollständige Verstellung des Oberteils (5) in die Crashlage bewirkt.

## Claims

1. Bonnet hinge (1, 1b) for the articulated arrangement of a bonnet on a vehicle, comprising
- a hinge lower part (2) which may be connected to a vehicle body component,
- a hinge upper part (3) which is able to be connected to the bonnet, comprising
- a flap part (4) connected in an articulated manner to the hinge lower part (2) and
- an upper part (5) which is able to be arranged on the bonnet, which is connected in an articulated manner to the flap part (4) and which is adjustable relative to said flap part between a normal position and a crash position,
- a blocking device (6, 6a, 6b) for releasably securing the upper part (5) to the flap part (4) in the normal position and
- a separating device for releasing the connection produced by the blocking device (6, 6a, 6b) securing the upper part (5) in the normal position to the flap part (4),
**characterised in that**
the blocking device (6, 6a, 6b) has a locking element (10) which in the normal position is able to be adjusted between a locked position and an unlocked position, and which is configured such that an unlocking force oriented in the direction of the crash position of the upper part (5) and acting on the upper part (5) arranged in the normal position causes an adjustment of the locking element (10) from the locked position into the unlocked position.

2. Bonnet hinge according to claim 1, **characterised in that** the locking element (10) is pretensioned in the direction of the locked position.

3. Bonnet hinge according to claim 1 or 2, **characterised in that** the pretensioning is adjustable.

4. Bonnet hinge according to one of the preceding claims, **characterised in that** the locking element (10) has a latching element (15) which in the locked position engages in a latching notch (16) on the upper part (5) and/or the flap part (4).

5. Bonnet hinge according to one of the preceding claims, **characterised in that** the latching element (15) and/or the latching notch (16) has a latching surface extending in an oblique manner and/or in an arcuate manner.

6. Bonnet hinge according to one of the preceding claims, **characterised in that** the locking element (10) is displaceably arranged on a guide pin (13, 13a, 13b) extending through a slotted guide (14) of the upper part (5) and secured to the flap part (4), in an axial manner between the locked position and the unlocked position, wherein the latching element (15) on the locking element (10) engages in the locked position in a latching notch (16) on the upper part (5).

7. Bonnet hinge according to one of the preceding claims, **characterised in that** the locking element (10) is arranged coaxially to the guide pin (13, 13a, 13b) and is fixed in terms of rotation relative thereto and preferably has at least two latching elements (15) arranged diametrically relative to one another.

8. Bonnet hinge according to one of the preceding claims, **characterised in that** the locking element (10) is pretensioned by a helical compression spring (11) arranged coaxially to the guide pin (13, 13a, 13b) in the direction of the locked position.

9. Bonnet hinge according to one of the preceding claims, **characterised in that** the helical compression spring (11) at one end bears against the locking element (10) and at the other end bears against a nut (12) which is able to be screwed onto the guide pin.

10. Bonnet hinge according to one of the preceding claims, **characterised in that** an activation of the separating device causes the upper part (5) to be subjected to an unlocking force oriented in the direction of the crash position.

11. Bonnet hinge according to one of the preceding claims, **characterised in that** the separating device has a pyrotechnical actuator which is configured such that during the activation thereof a drive element of the actuator subjects the upper part (5) to the unlocking force and adjusts said upper part in the direction of the crash position.

12. Bonnet hinge according to one of the preceding claims, **characterised in that** the actuator is configured such that, after activation, the drive element causes a full adjustment of the upper part (5) into the crash position.

## Revendications

1. Charnière de capot (1, 1b) pour l'agencement articulé d'un capot sur un véhicule, avec
- une partie inférieure de charnière (2) apte à être reliée à une pièce de carrosserie ;
- une partie supérieure de charnière (3) apte à être reliée au capot, avec
- une partie de volet (4) reliée de façon articulée à la partie inférieure de charnière (2), et
- une partie supérieure (5) apte à être montée sur le capot, reliée de façon articulée à la partie de volet (4) et réglable par rapport à celle-ci entre une position normale et une position de collision,
- un dispositif d'arrêt (6, 6a, 6b) pour la fixation détachable de la partie supérieure (5) sur la partie de volet (4) dans la position normale, et
- un dispositif de séparation pour le détachement de l'assemblage produit par le dispositif d'arrêt (6, 6a, 6b) fixant la partie supérieure (5) sur la partie de volet (4) dans la position normale,
**caractérisée en ce que**
le dispositif d'arrêt (6, 6a, 6b) comporte un élément de verrouillage (10) réglable dans la position normale entre une position de verrouillage et une position de déverrouillage, conçu de manière à ce qu'une application de force sur la partie supérieure (5) agencée dans la position normale avec une force de déverrouillage orientée vers la position de collision de la partie supérieure (5) provoque un passage de l'élément de verrouillage (10) de la position de verrouillage vers la position de déverrouillage.

2. Charnière de capot selon la revendication 1, **caractérisée en ce que** l'élément de verrouillage (10) est précontraint vers la position de verrouillage.

3. Charnière de capot selon la revendication 1 ou 2, **caractérisée en ce que** la précontrainte est réglable.

4. Charnière de capot selon l'une des revendications précédentes, **caractérisée en ce que** l'élément de verrouillage (10) comporte un élément d'encliquetage (15) s'engageant dans un repère d'encliquetage (16) sur la partie supérieure (5) et/ou la partie de volet (4) dans la position de verrouillage.

5. Charnière de capot selon l'une des revendications précédentes, **caractérisée en ce que** l'élément d'encliquetage (15) et/ou le repère d'encliquetage (16) comportent une surface d'encliquetage s'étendant en biais et/ou en forme d'arc.

6. Charnière de capot selon l'une des revendications précédentes, **caractérisée en ce que** l'élément de verrouillage (10) est agencé de façon à pouvoir coulisser axialement entre la position de verrouillage et la position de déverrouillage sur une broche de guidage (13, 13a, 13b) fixée sur la partie de volet (4) et s'étendant à travers un guidage à coulisse (14) de la partie supérieure (5), dans laquelle, dans la position de verrouillage, l'élément d'encliquetage (15) sur l'élément de verrouillage (10) s'engage dans un repère d'encliquetage (16) sur la partie supérieure (5).

7. Charnière de capot selon l'une des revendications précédentes, **caractérisée en ce que** l'élément de verrouillage (10) est agencé coaxialement à la broche de guidage (13, 13a, 13b) et bloqué en rotation par rapport à celle-ci, et comporte de préférence au moins deux éléments d'encliquetage (15) agencés diamétralement.

8. Charnière de capot selon l'une des revendications précédentes, **caractérisée en ce que** l'élément de verrouillage (10) est précontraint vers la position de verrouillage par ressort de pression à boudin (11) agencé coaxialement à la broche de guidage (13, 13a, 13b).

9. Charnière de capot selon l'une des revendications précédentes, **caractérisée en ce que** le ressort de pression à boudin (11) s'applique sur l'élément de verrouillage (10) à une extrémité et sur un écrou (12) apte à être vissé sur la broche de guidage à l'autre extrémité.

10. Charnière de capot selon l'une des revendications précédentes, **caractérisée en ce qu'**une activation du dispositif de séparation provoque une application de force sur la partie supérieure (5) avec une force de déverrouillage orientée vers la position de collision.

11. Charnière de capot selon l'une des revendications précédentes, **caractérisée en ce que** le dispositif de séparation comporte un actionneur pyrotechnique conçu de manière à ce que lors de son activation, un élément d'entraînement de l'actionneur soumet la partie supérieure (5) à la force de déverrouillage et déplace celle-ci vers la position de collision.

12. Charnière de capot selon l'une des revendications précédentes, **caractérisée en ce que** l'actionneur est conçu de manière à ce qu'après l'activation, l'élément d'entraînement provoque un déplacement complet de la partie supérieure (5) dans la position de collision.
